# EUROPEAN PATENT SPECIFICATION

(11) **EP 4 361 549 B1**
(45) Date of publication and mention of the grant of the patent: **02.12.2026**
(21) Application number: 23205302.5
(22) Date of filing: 23.10.2023
(51) Int. Cl.: F28D 7/00, F28D 21/00, C03B 5/23

(54) **HEAT EXCHANGER AND HIGH-TEMPERATURE FLUID TRANSPORT PIPELINE, AND HEAT EXCHANGE METHOD**
WÄRMETAUSCHER UND HOCHTEMPERATUR-FLÜSSIGKEITS-TRANSPORTLEITUNG, UND WÄRMETAUSCHVERFAHREN
ÉCHANGEUR DE CHALEUR ET CONDUITE DE TRANSPORT DE FLUIDE À HAUTE TEMPÉRATURE, ET PROCÉDÉ D'ÉCHANGE DE CHALEUR

(30) Priority: 31.10.2022 CN 202211348756
(43) Date of publication of application: 01.05.2024
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: LIU, Ruochen, Shanghai, 201108 (CN); Gu, Yuquan, Shanghai, 201108 (CN); VANKAMPEN, Peter, Shanghai, 201108 (CN); PAN, Yuejin, Shanghai, 201108 (CN)
(74) Representative: Air Liquide

(56) References cited:
- CN-U- 204 509 192
- JP-A- S5 710 084
- US-A1- 2022 205 728
- US-A1- 2022 205 734

## Description

### Technical Field

The present invention relates to the field of high-temperature fluid heat recovery, and relates to a heat exchanger and a high-temperature fluid transport pipeline and a method of heat exchange. In particular, it relates to a heat exchanger and a high-temperature fluid transport pipeline for recovering heat from flue gas generated by combustion and/or thermal cracking for heating fuel and/or oxidant gas. A heat exchanger and a high-temperature fluid transport pipeline according to the preamble of claim 1 are known from document JP S57 10084 A.

### Background Art

Processes such as glass and metal smelting are generally equipped with burners using fossil fuels and oxidants. These processes not only require significant energy consumption, but also generate a large amount of flue gas emissions. Efforts have been made to reduce energy costs and to treat this flue gas.

Many furnaces operate with oxy-fuel combustion, which means that combustion no longer occurs between fuel and air (air combustion), but between fuel and oxygen-enriched gas with an oxygen concentration higher than air (oxy-fuel combustion). The flue gas formed by such oxy-fuel combustion contains a large amount of heat energy. For example, in oxy-fuel combustion, the energy contained in the flue gas may account for about 30% of the energy consumed. It is desirable if this part of energy can be recovered from the flue gas.

The use of oxygen-enriched gas presents new challenges to the structures and operation of the burner and a series of heat exchangers. The risks associated with the use of oxygen-enriched gas begin to arise from the rise in temperature, in particular, for the heat exchangers in which a large amount of oxygen-enriched gas is enclosed.

The Chinese invention patent with the publication No. CN 100575788 C discloses an indirect heat exchanger. A device for delivering a combustion gas is provided in a heat exchange region containing an inert gas. The heat transfer between a flue gas and the combustion gas is conducted indirectly. The heat exchanger includes a heat exchange region traversed by the flue gas. Heat passes through a wall of a device for containing the inert gas, passes through an inert gas atmosphere, and passes through a wall of a device for containing the combustion gas. However, due to the large space occupied and the high investment cost, such a heat exchanger is not widely used.

The Chinese utility model patent with the publication No. CN 214950753 U discloses a high-temperature fluid transport pipeline integrated with a heat exchanger. The heat exchanger includes a closed heat exchange cavity and a heat-receiving fluid coil installed therein. The method of heat exchange is that a high-temperature fluid heats an auxiliary fluid in the cavity via a heat exchange base plate of the heat exchange cavity in contact therewith, and the heated auxiliary fluid then conducts the heat to a heat-receiving fluid in the heat-receiving fluid coil. However, it is only suitable for modification of various high-temperature fluid transport pipelines arranged substantially horizontally, and thus has limitations.

Heating an oxygen flow is extremely challenging because the high reactivity of oxygen at high temperatures poses extreme constraints on the design and structure of a heat recovery system. It is also difficult to directly use the flue gas to heat oxygen because of the fear that oxygen will inevitably react with the flue gas.

There are also approaches in the prior arts in which ceramic heat exchangers are used. However, since the heat transfer is radiative and the ceramic material is fragile, the heat exchanger is susceptible to leakage, and it is necessary to take into account the safety of an oxygen flow or a fuel flow, these approaches are unacceptable.

### Summary of the Invention

The present invention aims to overcome the deficiencies in the prior arts and to provide a system and method for recovering heat from a high-temperature fluid. By modifying the existing high-temperature fluid transport pipeline and making a heat exchanger form a part of the high-temperature fluid transport pipeline, the heat recovery rate can be increased to the maximum.

The present invention provides a heat exchanger and a high-temperature fluid transport pipeline according to claim 1.

The invention further defines a plurality of heat exchangers and a high-temperature fluid transport pipeline according to claim 9.

The heat exchanger comprises a heat exchange base plate in contact with the high-temperature fluid and comprises a housing. At least one heat exchange region is formed between the housing and the heat exchange base plate. A heat-receiving fluid coil for delivering the heat-receiving fluid passes through the heat exchange region.

The housing comprises a thermal insulation layer outer wall and a thermal insulation layer inner wall. At least part of the thermal insulation layer inner wall advantageously comprises a heat reflecting plate for reflecting the heat, that is radiated to the thermal insulation layer inner wall from the high-temperature fluid, back to the heat-receiving fluid coil.

A cavity between the thermal insulation layer inner wall and the thermal insulation layer outer wall may be vacuumed or may be filled with a thermal insulation material including thermal insulation cotton and/or perlite sand, etc.

The heat exchanger comprises a heat-receiving fluid inlet and a heat-receiving fluid outlet, for example provided in the thermal insulation layer outer wall. The heat-receiving fluid inlet is typically in turn in communication with a heat-receiving fluid inlet distributor and an inlet of the heat-receiving fluid coil located in the heat exchange region. The heat-receiving fluid outlet is typically in turn in communication with a heat-receiving fluid outlet distributor and an outlet of the heat-receiving fluid coil. For the heat-recovery process, on the outside of the heat exchanger, the heat-receiving fluid inlet and the heat-receiving fluid outlet are respectively connected to a heat-receiving fluid delivery system, typically via flanges. The heat-receiving fluid delivery system includes a valve for regulating a flow rate of the heat-receiving fluid to and therefore also from the heat exchanger, a heat-receiving fluid controller, etc. The heat-receiving fluid controller may receive one or more control parameters, such as a heat-receiving fluid outlet temperature and/or pressure measured by a measuring device. On this basis, the heat-receiving fluid controller may adjust the flow rate (or flow speed), temperature and pressure, etc. of the heat-receiving fluid. Since variables such as temperature and pressure of the heat-receiving fluid are important industrial parameters, a measurement device such as a temperature sensor and/or a pressure sensor may be provided on a heat-receiving fluid outlet pipeline or at the heat-receiving fluid outlet distributor connected to the heat-receiving fluid outlet.

The heat exchanger may further be provided with an auxiliary fluid inlet and an auxiliary fluid outlet, for example at thermal insulation layer outer wall. The auxiliary fluid inlet and the auxiliary fluid outlet are respectively in communication with the heat exchange region. In that case, a gas composition analyzer may be provided at the auxiliary fluid outlet to ensure that the heat-receiving fluid does not leak out of the heat heat-receiving fluid coil. If the gas composition measured by the gas composition analyzer is inconsistent with the composition of the auxiliary fluid and/or the flow rate of the heat-receiving fluid increases or decreases, in particular increases, between the heat-receiving fluid inlet and the heat-receiving fluid outlet, this indicates that the heat-receiving fluid coil is broken or leaking. At this point, the heat exchanger can be stopped immediately and repaired.

Those skilled in the art may provide one or more auxiliary fluid inlets and auxiliary fluid outlets as required.

For the heat-recovery process, on the outside of the heat exchanger, the auxiliary fluid inlet and the auxiliary fluid outlet are respectively connected to an auxiliary fluid delivery system which includes a valve for regulating a flow rate of the auxiliary fluid through the heat exchanger and an auxiliary fluid controller, etc. The auxiliary fluid flows in a space outside the heat-receiving fluid coil in the heat exchange region. An auxiliary fluid coil may be configured to pass through the heat exchange region. The auxiliary fluid controller may also receive one or more control parameters, such as the heat-receiving fluid outlet temperature and/or pressure measured by a measuring device. On this basis, the auxiliary fluid controller may adjust the flow rate (or flow speed), temperature and pressure, etc. of the auxiliary fluid.

A first aspect of the present invention provides a heat exchanger and a high-temperature fluid transport pipeline, the heat exchanger being configured to exchange heat between a high-temperature fluid and a heat-receiving fluid, wherein the heat exchanger forms a part of a high-temperature fluid transport pipeline,

The heat exchanger comprises:
a housing comprising a thermal insulation layer outer wall and a thermal insulation layer inner wall, an axis of the housing being parallel to a flow direction of the high-temperature fluid;
a high-temperature fluid inlet and a high-temperature fluid outlet formed in the housing;
a heat exchange base plate, which is in contact with the high-temperature fluid, at least one heat exchange region being formed between the housing and the heat exchange base plate, and a heat-receiving fluid coil for delivering the heat-receiving fluid passing through the heat exchange region; and
a heat-receiving fluid inlet and a heat-receiving fluid outlet.

Further, the high-temperature fluid transport pipeline is vertically arranged.

Further, the heat-receiving fluid coil may comprise at least one spirally wound tubular channel.

Further, a space may be defined between adjacent tubular channels for forming a fluid path for the auxiliary fluid to flow along the tubular channels.

Further, at least part of the thermal insulation layer inner wall may comprise a heat reflecting plate.

Further, the heat-receiving fluid inlet and the heat-receiving fluid outlet may be arranged on the thermal insulation layer outer wall.

Further, the heat exchanger may further comprise an auxiliary fluid coil passing through the heat exchange region.

Further, the auxiliary fluid coil may comprise at least one spirally wound tubular channel.

Further, the auxiliary fluid coil may be provided with an auxiliary fluid inlet and an auxiliary fluid outlet. Suitable high-temperature fluids may contain a flue gas generated by combustion and/or cracking.

A second aspect of the present invention provides a heat exchange method for transferring heat to a heat-receiving fluid by using a high-temperature fluid according to claim 10. According to said method, at least a part of a high-temperature fluid transport pipeline is composed of a heat exchanger according to the first aspect of the present invention. The high-temperature fluid transport pipeline is vertically arranged. The heat exchanger comprises a heat exchange base plate in contact with the high-temperature fluid. The heat exchanger comprises a housing. At least one heat exchange region is formed between the housing and the heat exchange base plate. A heat-receiving fluid coil passes through the heat exchange region and delivers the heat-receiving fluid. The heat-receiving fluid is provided and made to flow in the heat-receiving fluid coil. In this manner, the heat-receiving fluid is heated by the high-temperature fluid through a heat radiation of the heat exchange base plate.

Further, an auxiliary fluid may be provided. In that case, the auxiliary fluid flows or is stationary in the heat exchange region.

In an embodiment of the present invention, the periphery of the heat exchange base plate surrounds the heat exchange region along substantially the entire axial extent of the heat exchanger and is spaced from the thermal insulation layer inner wall. The surface of the heat exchange base plate as a whole may be cylindrical.

In a vertically arranged high-temperature fluid transport pipeline, part of it may be replaced by the heat exchanger. Taking a flue gas from a high-temperature process by way of example of the high-temperature fluid, a bottom end face of the heat exchanger is tightly pressed against refractory bricks under the heat exchanger, and refractory bricks above the heat exchanger are tightly pressed against an upper end face of the heat exchanger. A support structure is arranged outside the housing of the heat exchanger.

Optionally, the heat exchange base plate, the thermal insulation layer inner and outer walls, the heat reflecting plate, and the heat-receiving fluid coil, etc., are all made of stainless steel.

Optionally, the high-temperature fluid transport pipeline is provided with a plurality of heat exchangers along a vertical direction, and end faces of adjacent heat exchangers are close to each other. Each end face is sealed by a refractory material.

The present invention also discloses a heat exchange method for transferring heat to a heat-receiving fluid by using a high-temperature fluid, the heat-receiving fluid flowing in a heat-receiving fluid coil, and an auxiliary fluid flowing or being stationary in a heat exchange region. Heat is transferred from the high-temperature fluid to the heat exchange base plate, heat is then transferred from the heat exchange base plate to the heat-receiving fluid coil in the heat exchange region, and finally heat is transferred to the heat-receiving fluid by convection.

The high-temperature fluid may in particular comprise a flue gas generating by combustion and/or thermal cracking.

The auxiliary fluid may comprise air, nitrogen or carbon dioxide. The heat-receiving fluid advantageously comprises or consists of a fuel gas or an oxidant gas, such as an oxygen-enriched gas, natural gas, or hydrogen. The high-temperature fluid, such as the flue gas, may, in particular, enter the heat exchanger at a temperature in the range of 500°C-1200°C, whereas the heat-receiving fluid may be heated to a temperature in the range of 300°C-600°C. The heat-receiving fluid advantageously is supplied to the heat exchanger at a flow speed in the range of 5-60 m/s, preferably 20-30 m/s. The auxiliary fluid advantageously is supplied to the heat exchanger at a flow speed in the range of 0-50 m/s, preferably 20-30 m/s. When the flow speed is 0 m/s, the auxiliary fluid is stationary in the heat exchanger, as described earlier.

It is an objective of the present invention to overcome the disadvantages in the prior art by modifying an existing high-temperature fluid transport pipeline such as a flue gas pipeline itself, so as to integrate a heat exchanger and the high-temperature fluid transport pipeline, maximizing the recovery of heat energy, saving space, and saving cost investment.

The use of the technical solution of the present invention will produce several beneficial technical effects.

First, according to the design of the heat exchanger in the present invention, modification of the original transport pipeline and installation of a new apparatus are very convenient, the heat exchange area is increased while saving the cost, and the heat exchange efficiency is improved.

Second, a plurality of heat exchangers may be installed together, and the plurality of heat exchangers can heat the same heat-receiving fluid or different heat-receiving fluids.

Third, the heat exchanger adopts an indirect heating mode, and the use of the auxiliary fluid, the temperature sensor, the gas composition analyser, etc., increases the safety and controllability of the heat exchanger.

### Brief Description of the Drawings

The drawings of the present application are only for illustration, for construing and explaining the present application, but do not limit the present application in any respect. Like reference numerals represent the corresponding parts throughout the accompanying drawings.
FIG. 1 shows a space structural diagram of a heat exchanger.
FIGS. 2 and 3 show cross-sectional views of a the invention with the heat exchanger installed to a vertical high-temperature fluid transport pipeline.

List of reference numerals: 1 - heat exchange base plate, 3 - upper end face, 4 - lower end face, 5 - heat-receiving fluid inlet, 6 - heat-receiving fluid outlet, 7 - temperature sensor, 8 - heat-receiving fluid inlet distributor, 9 - heat-receiving fluid outlet distributor, 10 - auxiliary fluid inlet, 11 - auxiliary fluid outlet, 12 - heat-receiving fluid coil, 13 - thermal insulation layer outer wall, 14 - thermal insulation layer inner wall, 15 - auxiliary fluid coil.

### Detailed Description of Embodiments

In the present invention, it is to be understood that the orientations or positional relationships indicated by the terms "up", "down", "front", "back", "perpendicular", "parallel", "top", "bottom", "inside", "outside", etc. are based on the orientations or positional relationships shown in the accompanying drawings, and are referenced to a horizontal plane.

Unless specifically stated otherwise, a qualifier like "a" appearing herein does not indicate the definition of quantity, but describes a distinguishing technical feature. Similarly, a modifier like "approximately" and "about" appearing before a numeral herein usually includes the numeral, and the specific meaning should be construed in light of the context. Unless being modified by a specific quantitative quantifier, a noun herein shall be regarded as including both the singular form and the plural form, and the technical solution may include a single one of the technical features or a plurality of the technical features.

In the present invention, the terms "installing", "connecting", "connection", "communication", "fixed", etc. should be understood in a broad sense, unless otherwise explicitly specified or defined, for example, it may be a fixed connection, a detachable connection or an integrated connection; may be a mechanical connection; and may be a direct connection or an indirect connection via an intermediate medium, or may be a communication between the interior of two elements or the interaction of two elements. Those skilled in the art can understand the specific meaning of the above terms in the present invention according to the specific circumstances.

The terms "axis" and "axial" refer to a direction, in a cylinder having a centreline and opposing circular ends, that extends parallel to the centreline between the opposing ends. In some cases, the term "axial" may be used with respect to components that are not cylindrical (or otherwise radially symmetrical). For example, an "axial" direction for a rectangular housing containing a rotating shaft may be regarded as a direction roughly parallel to an axis of rotation of the shaft.

The term "heat exchanger" is used in the common technical sense of the term, in other words, refers to an apparatus in which at least two fluids having different temperatures circulate in a unique chamber and transfer heat between each other. "Heat exchanger" is understood to refer to a heating facility or device in which a fluid (gas) contributing heat and a fluid (gas) to be heated circulate in separate chambers, and the first fluid transfers heat to the fluid to be heated through one or more walls separating the two chambers, i.e. there is no direct contact and no mixing between the two fluids.

The term "oxygen-enriched gas" is to be understood as a gas having an oxygen content of greater than or equal to 70% by volume, preferably greater than or equal to 90% by volume, or even greater than or equal to 95% by volume.

The term "auxiliary fluid" may be air, water vapor, carbon dioxide or a combination thereof. The auxiliary gas is preferably air.

The term "heat exchange region" is used for the region in which heat is transferred from the high-temperature fluid to the heat-receiving fluid. For example, the "heat exchange region" is used to transfer heat from a flue gas generated by combustion and/or thermal cracking to a heat-receiving fluid.

The term "heat-receiving fluid" refers to any gas used in the combustion and/or thermal cracking process, in particular an oxidant such as an oxygen-enriched gas and air, or a fuel such as natural gas and hydrogen.

High-temperature fluid in the present application may include a variety of forms and compositions. The high-temperature fluid may contain gas or liquid. The high-temperature fluid may be a single component or may be a mixture. The "high-temperature" in "high-temperature fluid" refers to a temperature which is higher than the temperature of the heat-receiving fluid, and which varies in a range of 100-1500°C. When the high-temperature fluid is a gas such as flue gas, its transport pipeline is generally composed of refractory bricks. The present application is suitable for modification of various high-temperature fluid transport pipelines arranged substantially vertically. During modifying, a part of the high-temperature fluid transport pipeline is replaced with a device having a heat exchange function, i.e., a heat exchanger in the present application.

In the heat exchanger, a heat exchange base plate and a housing are connected via an upper end face and a lower end face. An axial cross-section of the heat exchange base plate 1 and an axial cross-section of a thermal insulation layer are parallel to each other. The heat exchange base plate 1, the thermal insulation layer, the upper end face 3 and the lower end face 4 define a substantially enclosed heat exchange region.

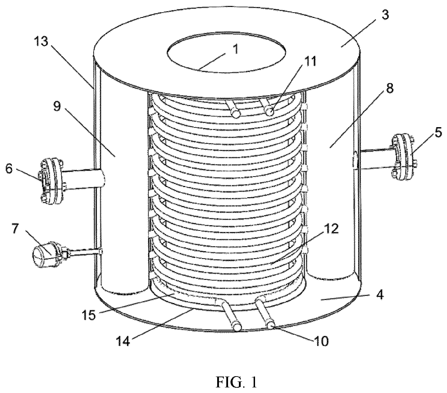

A heat-receiving fluid coil 12 extends in a spirally wound manner around an axial direction of the heat exchanger, and the spirals of the heat-receiving fluid coil are attached to each other as much as possible. As shown in FIG. 1, a heat exchanger body is of a hollow cylindrical structure, and a high-temperature fluid flows through the center of the heat exchanger to transfer heat to the heat exchange base plate 1. The heat exchange base plate 1 radiates heat to the heat-receiving fluid coil 12. Such design has the advantages of large heat exchange area and high heat exchange efficiency.

The thermal insulation layer is of a hollow annular three-dimensional structure including a thermal insulation layer inner wall 14 and a thermal insulation layer outer wall 13. At least a part of the thermal insulation layer inner wall 14 is formed or covered by a heat reflecting plate. A space between the thermal insulation layer inner wall and the thermal insulation layer outer wall may be vacuumed or may be filled with a thermal insulation material such as thermal insulation cotton and/or perlite sand.

A heat-receiving fluid outlet distributor 9 is provided with a temperature sensor 7 and/or a pressure sensor. Further, a heat-receiving fluid inlet distributor 8 is located directly opposite the heat-receiving fluid outlet distributor 9.

The thermal insulation layer outer wall 13 may be further provided with an auxiliary fluid inlet 10 and an auxiliary fluid outlet 11. An auxiliary fluid flows within an auxiliary fluid coil 15. The auxiliary fluid coil is located in the heat exchange region. The auxiliary fluid coil is provided with uniformly distributed aeration holes, so that the auxiliary fluid is supplied more uniformly. Optionally, a gas composition analyzer is provided near the auxiliary fluid outlet for detecting leakage of the heat-receiving fluid.

The heat exchange base plate of the heat exchanger may have various forms. As shown in FIG. 1, the heat exchange base plate 1, the thermal insulation layer outer wall 13 and the thermal insulation layer inner wall 14 are substantially parallel and each have a cylindrical shape.

As shown in FIG. 1, the heat exchange base plate and the thermal insulation layer in the heat exchanger are connected to each other via the upper end face 3 and the lower end face 4. The faces of the above parts may be planar, curved, or faces containing bends, protrusions, or hollows for installation purposes. Optionally, the projections of the heat exchange base plate and the thermal insulation layer in the axial direction are parallel to each other. The upper end face 3 and the lower end face 4 are parallel to each other. The heat exchange base plate, the thermal insulation layer and the upper and lower end faces define a substantially enclosed heat exchange region (except for each outlet and each inlet).

The heat exchanger of the present invention adopts an indirect heat exchange mode. A high-temperature fluid first heats the heat exchange base plate 1 by means of conduction, radiation, convection, etc. The heat exchange base plate 1 then heats the heat-receiving fluid coil by means of conduction, radiation, etc., thereby further conducting heat to the heat-receiving fluid.

The thermal insulation layer inner wall 14 is partially covered by the heat reflecting plate and the thermal insulation material to keep heat in the heat exchange region as much as possible. When the heat-receiving fluid contains a substance that is reactive, corrosive or otherwise hazardous at high temperatures, such as O₂ or CH₄, the safety of the heat exchange process can be greatly improved by using indirect heat exchange.

The auxiliary fluid may be selected from air, water vapor, N₂, CO₂, etc., whereas the heat exchange base plate is less likely to be damaged due to corrosion, aging, etc., when heated in these relatively inert atmospheres, and will not cause safety accidents such as leakage.

The selection of material (including composition, thickness, strength, finish, etc.) for each part of the heat exchanger depends on the properties of the fluid in contact therewith and the temperature and pressure conditions during use. For example, the heat exchange base plate requires an excellent thermal conductivity and can withstand rapid variations in temperature over a wide range. The upper end face 3 and the lower end face 4 require sufficient strength and resistance to temperature variations. The wall of the heat-receiving fluid coil 12 requires both good thermal conductivity and non-reaction with the heat-receiving fluid within the operating temperature range. When the heat-receiving fluid is an oxygen-enriched gas (i.e., the oxygen content thereof is higher than the oxygen content in the air, optionally higher than 50%, further higher than 80%, and further higher than 90%), the material in contact therewith needs to be non-combustible in a hot oxygen atmosphere, and corrosion-resistant and oxidation-resistant.

The heat exchange efficiency of the heat exchanger and the temperature at the heat-receiving fluid outlet can be regulated in various ways. When the temperature and the flow speed of the high-temperature fluid are substantially constant, increasing the flow rate and the flow speed of the auxiliary fluid will lower the temperature of the auxiliary fluid after receiving heat, and correspondingly, the temperature of the heat-receiving fluid will also decrease. If the auxiliary fluid is a gas, increasing its pressure will increase its density, thereby increasing the heat transfer efficiency. Similarly, while other conditions remain unchanged, increasing the flow speed or the flow rate of the heat-receiving fluid will also reduce the temperature at the heat-receiving fluid outlet.

In a preferred embodiment, a vertically mounted high-temperature flue gas pipeline has an inner diameter of 0.4 m. The heat exchange base plate has a surface area of 1 m². The heat-receiving fluid coil has a heat transfer area of 2.5 m² (calculated based on the developed area). All metal components in the heat exchanger are made of 310 SS. The high-temperature flue gas has a temperature in the range of 500°C-1200°C. The heat-receiving fluid is an oxygen-enriched gas, such as oxygen. A height between the upper end face and the lower end face may be 800 mm.

In the present application, the flue gas generated after combustion is introduced into the high-temperature flue gas pipeline. The main components of the flue gas are carbon dioxide, water, carbon monoxide, sulfur dioxide, nitrogen oxides, etc., and the temperature varies in the range of 500-1200°C. The heat-receiving fluid is oxygen, and it is expected that the temperature that can be reached after oxygen is heated is in the range of 300-600°C. The auxiliary fluid is selected as air.

The flow rates, flow speeds and pressures, etc. of the heat-receiving fluid and the auxiliary fluid are each controlled by controllers in their respective delivery systems. The flow speed of the heat-receiving fluid varies in the range of 5-100 m/s, preferably 20-60 m/s. The flow speed of the auxiliary fluid varies in the range of 0-50 m/s, preferably 20-30 m/s.

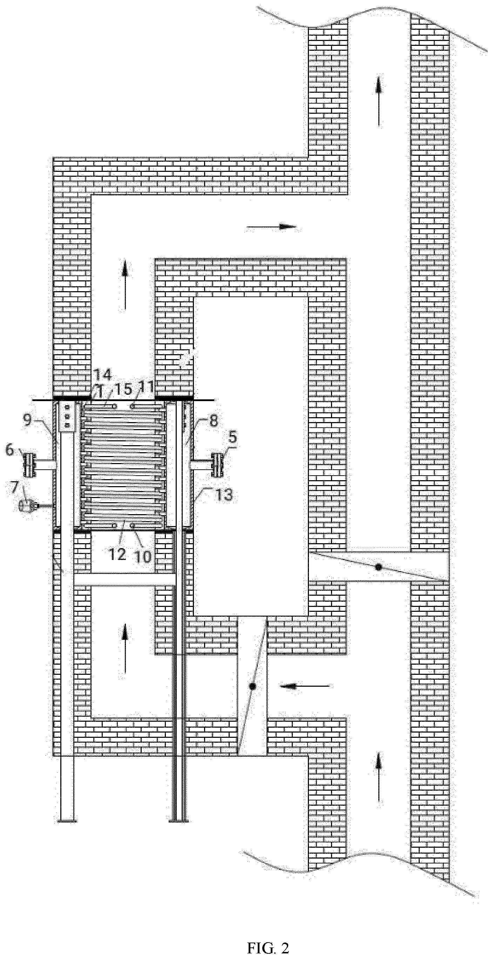

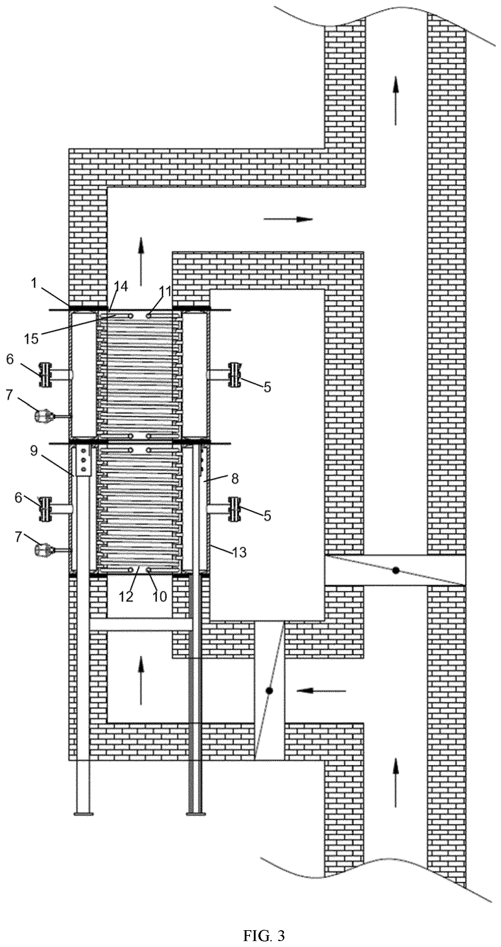

FIG. 2 shows how a heat exchange apparatus of the present application is installed on a vertical high-temperature flue gas pipeline. The refractory bricks of part of the high-temperature flue gas pipeline are replaced by the heat exchanger. A contact face between the heat exchanger and the high-temperature flue gas pipeline is sealed with a refractory material. In addition, as shown in FIG. 3, a plurality of heat exchangers may also be stacked together, and the heat-receiving fluid and the auxiliary fluid in the heat exchangers may be the same or different.

As shown in FIG. 2, taking an usual vertical high-temperature flue gas pipeline composed of refractory bricks, when installing the above heat exchanger of the present application, part of the refractory bricks of the high-temperature flue gas pipeline can be removed, and then the heat exchanger can be hoisted to a proper position and pressed flat against the remaining part of the high-temperature flue gas pipeline. The contact faces between the heat exchanger and the transport pipeline are sealed with a refractory material, such as ceramic fiber, glass fiber, refractory mud, etc. As shown in FIG. 3, those skilled in the art may arrange a plurality of heat exchangers, which are stacked on the high-temperature flue gas pipeline in sequence, as required, and the contact surfaces between the heat exchangers are also sealed with refractory cotton. The auxiliary fluid and the heat-receiving fluid in the plurality of heat exchangers may be the same or different.

In the various processes of oxygen-enriched combustion, such as the oxygen-enriched combustion in a glass furnace, the oxygen after heat exchange is fed to a burner together with the fuel, so that a higher combustion temperature and less energy loss in the flue gas can be obtained, the efficiency of combustion is improved, and the generation of nitrogen oxides and dust is reduced.

## Claims

1. Heat exchanger and high-temperature fluid transport pipeline, the heat exchanger being configured to exchange heat between a high-temperature fluid and a heat-receiving fluid, the heat exchanger forming a part of the high-temperature fluid transport pipeline and comprising: a housing with a high-temperature fluid inlet and a high-temperature fluid outlet formed therein, the housing having an axis parallel to a flow direction of the high-temperature fluid through the center of the heat exchanger; the housing comprising a thermal insulation layer with a thermal insulation layer outer wall (13) and a thermal insulation layer inner wall (14), a heat exchange base plate (1), which is in contact with the high-temperature fluid; an upper end face (3) and a lower end face (4), the heat exchange base plate (1) and the thermal insulation layer being connected to each other via the upper end face (3) and the lower end face (4); a heat exchange region being formed between the thermal insulation layer, the heat exchange base plate (1), the upper end face (3) and the lower end face (4), a heat-receiving fluid inlet (5) and a heat-receiving fluid outlet (6); and a heat-receiving fluid coil (12) for delivering the heat-receiving fluid passing through the heat exchange region; and the high-temperature fluid transport pipeline being vertically arranged, the heat exchanger and the high-temperature pipeline being **characterized by** the lower end face (3) of the heat exchanger being pressed tightly against refractory bricks of the high-temperature fluid transport pipeline under the heat exchanger and refractory bricks of the high-temperature fluid transport pipeline above the heat exchanger being tightly pressed against the upper end face (4) of the heat exchanger, a support structure being arranged outside the housing of the heat exchanger.

2. Heat exchanger and high-temperature fluid transport pipeline according to claim 1, **characterized in that** at least part of the thermal insulation layer inner wall (14) comprises a heat reflecting plate.

3. Heat exchanger and high-temperature fluid transport pipeline according to either of the preceding claims, **characterized in that** the heat-receiving fluid inlet (5) and the heat-receiving fluid outlet (6) are arranged on the thermal insulation layer outer wall (13).

4. Heat exchanger and high-temperature fluid transport pipeline according to any one of claims 1 to 3, **characterized in that** the heat-receiving fluid coil (12) comprises at least one spirally wound tubular channel, the heat-receiving fluid coil (12) being preferably spirally wound around the axial direction of the heat exchanger.

5. Heat exchanger and high-temperature fluid transport pipeline according to 4, **characterized in that** a defined space is defined between adjacent tubular channels for forming a fluid path for an auxiliary fluid to flow along the tubular channels.

6. Heat exchanger and high-temperature fluid transport pipeline according to any one of claims 1 to 4, **characterized in that** the heat exchanger further comprises an auxiliary fluid coil (15) passing through the heat exchange region.

7. Heat exchanger and high-temperature fluid transport pipeline according to claim 6, **characterized in that** the auxiliary fluid coil (15) comprises at least one spirally wound tubular channel.

8. Heat exchanger and high-temperature fluid transport pipeline according to claim 6 or 7, **characterized in that** the auxiliary fluid coil (15) is provided with an auxiliary fluid inlet (10) and an auxiliary fluid outlet (11).

9. Plurality of heat exchangers and high-temperature fluid transport pipeline, the heat exchangers being configured to exchange heat between a high-temperature fluid and a heat-receiving fluid, the heat exchangers being stacked together and forming a part of the high-temperature fluid transport pipeline each heat exchanger comprising: a housing with a high-temperature fluid inlet and a high-temperature fluid outlet formed therein, the housing having an axis parallel to a flow direction of the high-temperature fluid through the center of the heat exchanger; the housing comprising a thermal insulation layer with a thermal insulation layer outer wall (13) and a thermal insulation layer inner wall (14), a heat exchange base plate (1), which is in contact with the high-temperature fluid; an upper end face (3) and a lower end face (4), the heat exchange base plate (1) and the thermal insulation layer being connected to each other via the upper end face (3) and the lower end face (4); a heat exchange region being formed between the thermal insulation layer, the heat exchange base plate (1), the upper end face (3) and the lower end face (4), a heat-receiving fluid inlet (5) and a heat-receiving fluid outlet (6); and a heat-receiving fluid coil (12) for delivering the heat-receiving fluid passing through the heat exchange region; and the high-temperature fluid transport pipeline being vertically arranged, the lower end face (3) of the stacked heat exchangers being pressed tightly against refractory bricks of the high-temperature fluid transport pipeline under the stacked heat exchangers and refractory bricks of the high-temperature fluid transport pipeline above the stacked heat exchangers being tightly pressed against the upper end face (4) of the stacked heat exchangers, a support structure being arranged outside the housing of the heat exchangers.

10. Method of heat exchange for transferring heat to a heat-receiving fluid by using a high-temperature fluid using a heat exchanger and high-temperature fluid transport pipeline according to any one of claims 1-8 or a plurality of heat exchangers and high-temperature fluid transport pipeline according to claim 9, wherein the heat-receiving fluid is provided and flows in the heat-receiving fluid coil (12) of the heat exchanger or the heat exchangers and wherein the heat-receiving fluid is heated by the high-temperature fluid through a heat radiation of the heat exchange base plate (1) of the heat exchanger or the heat exchangers.

11. Method according to claim 10, **characterized in that** the heat exchanger or the heat exchangers comprise an auxiliary fluid coil (15) passing through the heat exchange region and **in that** the auxiliary fluid in the auxiliary fluid coil comprises air, nitrogen or carbon dioxide.

12. Method according to claim 10 or 11, **characterized in that** the heat-receiving fluid comprises a fuel gas or an oxidant gas, such as an oxygen-enriched gas, natural gas, or hydrogen.

13. Method according to any one of claims 10 to 12, **characterized in that** the high-temperature fluid enters the heat exchanger or the heat exchangers at a temperature in the range of 500°C-1200°C, and the heat-receiving fluid is heated to a temperature in the range of 300°C-600°C.

14. Method according to any one of claims 10 to 13, **characterized in that** the heat-receiving fluid enters the heat exchanger or the heat exchangers at a flow speed in the range of 5-60 m/s.

## Patentansprüche

1. Ein Wärmetauscher und eine Hochtemperatur-Fluidtransportleitung, wobei der Wärmetauscher konfiguriert ist, um Wärme zwischen einem Hochtemperaturfluid und einem wärmeaufnehmenden Fluid auszutauschen, wobei der Wärmetauscher einen Teil der Hochtemperatur-Fluidtransportleitung bildet und Folgendes umfasst: ein Gehäuse mit einem darin ausgebildeten Einlass für Hochtemperaturfluid und einem Auslass für Hochtemperaturfluid, wobei das Gehäuse eine Achse parallel zu einer Strömungsrichtung des Hochtemperaturfluids durch das Zentrum des Wärmetauschers aufweist; wobei das Gehäuse eine Wärmeisolationsschicht mit einer Außenwand (13) der Wärmeisolationsschicht und einer Innenwand (14) der Wärmeisolationsschicht umfasst, eine Wärmetauscher-Grundplatte (1), die in Kontakt mit dem Hochtemperaturfluid steht; eine obere Stirnfläche (3) und eine untere Stirnfläche (4), wobei die Wärmetauscher-Grundplatte (1) und die Wärmeisolationsschicht über die obere Stirnfläche (3) und die untere Stirnfläche (4) miteinander verbunden sind; einen Wärmetauscherbereich, der zwischen der Wärmeisolationsschicht, der Wärmetauscher-Grundplatte (1), der oberen Stirnfläche (3) und der unteren Stirnfläche (4) gebildet ist, einen Einlass für wärmeaufnehmendes Fluid (5) und einen Auslass für wärmeaufnehmendes Fluid (6); und eine Spule für wärmeaufnehmendes Fluid (12) zum Fördern des wärmeaufnehmenden Fluids, das durch den Wärmetauscherbereich strömt; und wobei die Hochtemperatur-Fluidtransportleitung vertikal angeordnet ist, der Wärmetauscher und die Hochtemperaturleitung **dadurch gekennzeichnet sind, dass** die untere Stirnfläche (3) des Wärmetauschers fest gegen feuerfeste Steine der Hochtemperatur-Fluidtransportleitung unter dem Wärmetauscher gepresst wird und feuerfeste Steine der Hochtemperatur-Fluidtransportleitung über dem Wärmetauscher fest gegen die obere Stirnfläche (4) des Wärmetauschers gepresst werden, wobei eine Stützstruktur außerhalb des Gehäuses des Wärmetauschers angeordnet ist.

2. Wärmetauscher und Hochtemperatur-Fluidtransportleitung nach Anspruch 1, **dadurch gekennzeichnet, dass** mindestens ein Teil der Innenwand (14) der Wärmeisolationsschicht eine wärmereflektierende Platte umfasst.

3. Wärmetauscher und Hochtemperatur-Fluidtransportleitung nach einem der vorhergehenden Ansprüche, **dadurch gekennzeichnet, dass** der Einlass für wärmeaufnehmendes Fluid (5) und der Auslass für wärmeaufnehmendes Fluid (6) an der Außenwand (13) der Wärmeisolationsschicht angeordnet sind.

4. Wärmetauscher und Hochtemperatur-Fluidtransportleitung nach einem der Ansprüche 1 bis 3, **dadurch gekennzeichnet, dass** die Spule für wärmeaufnehmendes Fluid (12) mindestens einen spiralförmig gewickelten rohrförmigen Kanal umfasst, wobei die Spule für wärmeaufnehmendes Fluid (12) vorzugsweise spiralförmig um die axiale Richtung des Wärmetauschers gewickelt ist.

5. Wärmetauscher und Hochtemperatur-Fluidtransportleitung nach Anspruch 4, **dadurch gekennzeichnet, dass** ein definierter Raum zwischen benachbarten rohrförmigen Kanälen definiert ist, um einen Fluidweg für ein Hilfsfluid zu bilden, um entlang der rohrförmigen Kanäle zu strömen.

6. Wärmetauscher und Hochtemperatur-Fluidtransportleitung nach einem der Ansprüche 1 bis 4, **dadurch gekennzeichnet, dass** der Wärmetauscher ferner eine Hilfsfluidspule (15) umfasst, die durch den Wärmetauscherbereich verläuft.

7. Wärmetauscher und Hochtemperatur-Fluidtransportleitung nach Anspruch 6, **dadurch gekennzeichnet, dass** die Hilfsfluidspule (15) mindestens einen spiralförmig gewickelten rohrförmigen Kanal umfasst.

8. Wärmetauscher und Hochtemperatur-Fluidtransportleitung nach Anspruch 6 oder 7, **dadurch gekennzeichnet, dass** die Hilfsfluidspule (15) mit einem Hilfsfluideinlass (10) und einem Hilfsfluidauslass (11) versehen ist.

9. Eine Vielzahl von Wärmetauschern und eine Hochtemperatur-Fluidtransportleitung, wobei die Wärmetauscher konfiguriert sind, um Wärme zwischen einem Hochtemperaturfluid und einem wärmeaufnehmenden Fluid auszutauschen, wobei die Wärmetauscher aufeinandergestapelt sind und einen Teil der Hochtemperatur-Fluidtransportleitung bilden, wobei jeder Wärmetauscher Folgendes umfasst: ein Gehäuse mit einem darin ausgebildeten Einlass für Hochtemperaturfluid und einem Auslass für Hochtemperaturfluid, wobei das Gehäuse eine Achse parallel zu einer Strömungsrichtung des Hochtemperaturfluids durch das Zentrum des Wärmetauschers aufweist; wobei das Gehäuse eine Wärmeisolationsschicht mit einer Außenwand (13) der Wärmeisolationsschicht und einer Innenwand (14) der Wärmeisolationsschicht umfasst, eine Wärmetauscher-Grundplatte (1), die in Kontakt mit dem Hochtemperaturfluid steht; eine obere Stirnfläche (3) und eine untere Stirnfläche (4), wobei die Wärmetauscher-Grundplatte (1) und die Wärmeisolationsschicht über die obere Stirnfläche (3) und die untere Stirnfläche (4) miteinander verbunden sind; einen Wärmetauscherbereich, der zwischen der Wärmeisolationsschicht, der Wärmetauscher-Grundplatte (1), der oberen Stirnfläche (3) und der unteren Stirnfläche (4) gebildet ist, einen Einlass für wärmeaufnehmendes Fluid (5) und einen Auslass für wärmeaufnehmendes Fluid (6); und eine Spule für wärmeaufnehmendes Fluid (12) zum Fördern des wärmeaufnehmenden Fluids, das durch den Wärmetauscherbereich strömt; und wobei die Hochtemperatur-Fluidtransportleitung vertikal angeordnet ist, wobei die untere Stirnfläche (3) der gestapelten Wärmetauscher fest gegen feuerfeste Steine der Hochtemperatur-Fluidtransportleitung unter den gestapelten Wärmetauschern gepresst wird und feuerfeste Steine der Hochtemperatur-Fluidtransportleitung über den gestapelten Wärmetauschern fest gegen die obere Stirnfläche (4) der gestapelten Wärmetauscher gepresst werden, wobei eine Stützstruktur außerhalb des Gehäuses der Wärmetauscher angeordnet ist.

10. Ein Verfahren zum Wärmeaustausch zur Übertragung von Wärme auf ein wärmeaufnehmendes Fluid unter Verwendung eines Hochtemperaturfluids unter Verwendung eines Wärmetauschers und einer Hochtemperatur-Fluidtransportleitung nach einem der Ansprüche 1-8 oder einer Vielzahl von Wärmetauschern und einer Hochtemperatur-Fluidtransportleitung nach Anspruch 9, wobei das wärmeaufnehmende Fluid bereitgestellt wird und in der Spule für wärmeaufnehmendes Fluid (12) des Wärmetauschers oder der Wärmetauscher fließt und wobei das wärmeaufnehmende Fluid durch das Hochtemperaturfluid durch Wärmestrahlung der Wärmetauscher-Grundplatte (1) des Wärmetauschers oder der Wärmetauscher erwärmt wird.

11. Verfahren nach Anspruch 10, **dadurch gekennzeichnet, dass** der Wärmetauscher oder die Wärmetauscher eine Hilfsfluidspule (15) umfassen, die durch den Wärmetauscherbereich verläuft, und dass das Hilfsfluid in der Hilfsfluidspule Luft, Stickstoff oder Kohlendioxid umfasst.

12. Verfahren nach Anspruch 10 oder 11, **dadurch gekennzeichnet, dass** das wärmeaufnehmende Fluid ein Brenngas oder ein Oxidationsgas, wie zum Beispiel ein mit Sauerstoff angereichertes Gas, Erdgas oder Wasserstoff, umfasst.

13. Verfahren nach einem der Ansprüche 10 bis 12, **dadurch gekennzeichnet, dass** das Hochtemperaturfluid in den Wärmetauscher oder die Wärmetauscher bei einer Temperatur im Bereich von 500°C-1200°C eintritt und das wärmeaufnehmende Fluid auf eine Temperatur im Bereich von 300°C-600°C erhitzt wird.

14. Verfahren nach einem der Ansprüche 10 bis 13, **dadurch gekennzeichnet, dass** das wärmeaufnehmende Fluid in den Wärmetauscher oder die Wärmetauscher mit einer Strömungsgeschwindigkeit im Bereich von 5-60 m/s eintritt.

## Revendications

1. Un échangeur de chaleur et une conduite de transport de fluide à haute température, l'échangeur de chaleur étant configuré pour échanger de la chaleur entre un fluide à haute température et un fluide récepteur de chaleur, l'échangeur de chaleur formant une partie de la conduite de transport de fluide à haute température et comprenant : un boîtier avec une entrée de fluide à haute température et une sortie de fluide à haute température formées en son sein, le boîtier ayant un axe parallèle à une direction d'écoulement du fluide à haute température à travers le centre de l'échangeur de chaleur ; le boîtier comprenant une couche d'isolation thermique avec une paroi extérieure de couche d'isolation thermique (13) et une paroi intérieure de couche d'isolation thermique (14), une plaque de base d'échange de chaleur (1), qui est en contact avec le fluide à haute température ; une face d'extrémité supérieure (3) et une face d'extrémité inférieure (4), la plaque de base d'échange de chaleur (1) et la couche d'isolation thermique étant reliées l'une à l'autre via la face d'extrémité supérieure (3) et la face d'extrémité inférieure (4) ; une région d'échange de chaleur étant formée entre la couche d'isolation thermique, la plaque de base d'échange de chaleur (1), la face d'extrémité supérieure (3) et la face d'extrémité inférieure (4), une entrée de fluide récepteur de chaleur (5) et une sortie de fluide récepteur de chaleur (6) ; et un serpentin de fluide récepteur de chaleur (12) pour acheminer le fluide récepteur de chaleur passant à travers la région d'échange de chaleur ; et la conduite de transport de fluide à haute température étant agencée verticalement, l'échangeur de chaleur et la conduite à haute température étant **caractérisés par le fait que** la face d'extrémité inférieure (3) de l'échangeur de chaleur est pressée fermement contre des briques réfractaires de la conduite de transport de fluide à haute température sous l'échangeur de chaleur et des briques réfractaires de la conduite de transport de fluide à haute température au-dessus de l'échangeur de chaleur sont pressées fermement contre la face d'extrémité supérieure (4) de l'échangeur de chaleur, une structure de support étant agencée à l'extérieur du boîtier de l'échangeur de chaleur.

2. Échangeur de chaleur et conduite de transport de fluide à haute température selon la revendication 1, **caractérisés en ce qu'**au moins une partie de la paroi intérieure de la couche d'isolation thermique (14) comprend une plaque réfléchissant la chaleur.

3. Échangeur de chaleur et conduite de transport de fluide à haute température selon l'une ou l'autre des revendications précédentes, **caractérisés en ce que** l'entrée de fluide récepteur de chaleur (5) et la sortie de fluide récepteur de chaleur (6) sont agencées sur la paroi extérieure de la couche d'isolation thermique (13).

4. Échangeur de chaleur et conduite de transport de fluide à haute température selon l'une quelconque des revendications 1 à 3, **caractérisés en ce que** le serpentin de fluide récepteur de chaleur (12) comprend au moins un canal tubulaire enroulé en spirale, le serpentin de fluide récepteur de chaleur (12) étant de préférence enroulé en spirale autour de la direction axiale de l'échangeur de chaleur.

5. Échangeur de chaleur et conduite de transport de fluide à haute température selon la revendication 4, **caractérisés en ce qu'**un espace défini est défini entre des canaux tubulaires adjacents pour former un trajet de fluide pour qu'un fluide auxiliaire s'écoule le long des canaux tubulaires.

6. Échangeur de chaleur et conduite de transport de fluide à haute température selon l'une quelconque des revendications 1 à 4, **caractérisés en ce que** l'échangeur de chaleur comprend en outre un serpentin de fluide auxiliaire (15) passant à travers la région d'échange de chaleur.

7. Échangeur de chaleur et conduite de transport de fluide à haute température selon la revendication 6, **caractérisés en ce que** le serpentin de fluide auxiliaire (15) comprend au moins un canal tubulaire enroulé en spirale.

8. Échangeur de chaleur et conduite de transport de fluide à haute température selon la revendication 6 ou 7, **caractérisés en ce que** le serpentin de fluide auxiliaire (15) est pourvu d'une entrée de fluide auxiliaire (10) et d'une sortie de fluide auxiliaire (11).

9. Une pluralité d'échangeurs de chaleur et une conduite de transport de fluide à haute température, les échangeurs de chaleur étant configurés pour échanger de la chaleur entre un fluide à haute température et un fluide récepteur de chaleur, les échangeurs de chaleur étant empilés ensemble et formant une partie de la conduite de transport de fluide à haute température, chaque échangeur de chaleur comprenant : un boîtier avec une entrée de fluide à haute température et une sortie de fluide à haute température formées en son sein, le boîtier ayant un axe parallèle à une direction d'écoulement du fluide à haute température à travers le centre de l'échangeur de chaleur ; le boîtier comprenant une couche d'isolation thermique avec une paroi extérieure de couche d'isolation thermique (13) et une paroi intérieure de couche d'isolation thermique (14), une plaque de base d'échange de chaleur (1), qui est en contact avec le fluide à haute température ; une face d'extrémité supérieure (3) et une face d'extrémité inférieure (4), la plaque de base d'échange de chaleur (1) et la couche d'isolation thermique étant reliées l'une à l'autre via la face d'extrémité supérieure (3) et la face d'extrémité inférieure (4) ; une région d'échange de chaleur étant formée entre la couche d'isolation thermique, la plaque de base d'échange de chaleur (1), la face d'extrémité supérieure (3) et la face d'extrémité inférieure (4), une entrée de fluide récepteur de chaleur (5) et une sortie de fluide récepteur de chaleur (6) ; et un serpentin de fluide récepteur de chaleur (12) pour acheminer le fluide récepteur de chaleur passant à travers la région d'échange de chaleur ; et la conduite de transport de fluide à haute température étant agencée verticalement, la face d'extrémité inférieure (3) des échangeurs de chaleur empilés étant pressée fermement contre des briques réfractaires de la conduite de transport de fluide à haute température sous les échangeurs de chaleur empilés et des briques réfractaires de la conduite de transport de fluide à haute température au-dessus des échangeurs de chaleur empilés étant pressées fermement contre la face d'extrémité supérieure (4) des échangeurs de chaleur empilés, une structure de support étant agencée à l'extérieur du boîtier des échangeurs de chaleur.

10. Un procédé d'échange de chaleur pour transférer de la chaleur à un fluide récepteur de chaleur en utilisant un fluide à haute température en utilisant un échangeur de chaleur et une conduite de transport de fluide à haute température selon l'une quelconque des revendications 1 à 8 ou une pluralité d'échangeurs de chaleur et une conduite de transport de fluide à haute température selon la revendication 9, dans lequel le fluide récepteur de chaleur est fourni et s'écoule dans le serpentin de fluide récepteur de chaleur (12) de l'échangeur de chaleur ou des échangeurs de chaleur et dans lequel le fluide récepteur de chaleur est chauffé par le fluide à haute température par un rayonnement thermique de la plaque de base d'échange de chaleur (1) de l'échangeur de chaleur ou des échangeurs de chaleur.

11. Procédé selon la revendication 10, **caractérisé en ce que** l'échangeur de chaleur ou les échangeurs de chaleur comprennent un serpentin de fluide auxiliaire (15) passant à travers la région d'échange de chaleur et **en ce que** le fluide auxiliaire dans le serpentin de fluide auxiliaire comprend de l'air, de l'azote ou du dioxyde de carbone.

12. Procédé selon la revendication 10 ou 11, **caractérisé en ce que** le fluide récepteur de chaleur comprend un gaz combustible ou un gaz oxydant, tel qu'un gaz enrichi en oxygène, du gaz naturel ou de l'hydrogène.

13. Procédé selon l'une quelconque des revendications 10 à 12, **caractérisé en ce que** le fluide à haute température entre dans l'échangeur de chaleur ou les échangeurs de chaleur à une température dans la plage de 500°C-1200°C, et le fluide récepteur de chaleur est chauffé à une température dans la plage de 300°C-600°C.

14. Procédé selon l'une quelconque des revendications 10 à 13, **caractérisé en ce que** le fluide récepteur de chaleur entre dans l'échangeur de chaleur ou les échangeurs de chaleur à une vitesse d'écoulement dans la plage de 5-60 m/s.
